**Europäisches Patentamt**

**European Patent Office**

**Office européen des brevets**

(11) Veröffentlichungsnummer: **0 092 744**

**A2**

## (12) EUROPÄISCHE PATENTANMELDUNG

(21) Anmeldenummer: 83103628.0

(22) Anmeldetag: 14.04.83

(51) Int. Cl.³: **F 16 P 3/00**
**F 16 P 3/12**

(30) Priorität: 22.04.82 CH 2455/82

(43) Veröffentlichungstag der Anmeldung:
02.11.83 Patentblatt 83/44

(84) Benannte Vertragsstaaten:
AT DE FR GB IT SE

(71) Anmelder: Bircher AG
Wiesengasse 20
CH-8222 Beringen(CH)

(72) Erfinder: Bänteli, Willy
Firkastrasse 46
CH-8200 Schaffhausen(CH)

(72) Erfinder: Dietrich, Rolf
Neutalstrasse 40
CH-8207 Schaffhausen(CH)

(72) Erfinder: Bos, Isaac
Hägliweg 4
CH-8222 Beringen(CH)

(74) Vertreter: Meyer, Reinhard
c/o EGLI PATENTANWÄLTE Horneggstrasse 4
CH-8008 Zürich(CH)

(54) Elektropneumatische Einrichtung zur Absicherung eines Gefahrenbereiches bei einer in Betrieb stehenden Maschine oder Anlage.

(57) Die Einrichtung weist ein an die Steuerung (1) der Maschine oder Anlage angeschlossenes Steuergerät (2), eine Hauptpumpe (3), eine Hilfspumpe (4) und zwei Ventile (5,6), zwei Druckwellenschalter (7,8) sowie ein pneumatisches Leitungsnetz (11,12,13) auf. Dieses führt durch den zu überwachenden Gefahrenbereich, in welchem Sicherheitsdosen (9) angeordnet sind. Die Einrichtung überwacht sich selber, indem die Hauptpumpe (3) ständig Unterdruckstösse durch das Leitungsnetz sendet, welche vom ersten Druckwellenschalter (7) dem zweiten (8) weitergegeben, von diesem registriert und vom Steuergerät (2) als ordnungsgemässes Funktionieren der Einrichtung ausgewertet werden. Bei Belegung des einen Fussboden (10) aufweisenden Gefahrenbereichs ergibt sich ein Ueberdruckstoss, der ebenfalls über die Druckwellenschalter (7,8) dem Steuergerät (2) übermittelt wird, welches darauf hin die Steuerung (1) der Maschine oder Anlage abschaltet.

Die Einrichtung überwacht also nicht nur die angeschlossene Maschine oder Anlage, sondern auch sich selber. Selbst eine Störung in einem ihrer Komponenten (2-6,8) führt nach kürzester Zeit zum Abschalten.

./...

EP 0 092 744 A2

FIG. 1

- 1 -

Elektropneumatische Einrichtung zur Absicherung eines
Gefahrenbereiches bei einer in Betrieb stehenden Maschine
oder Anlage

Die Erfindung betrifft eine elektropneumatische Einrichtung zur Absicherung eines Gefahrenbereiches bei
einer in Betrieb stehenden Maschine oder Anlage, wobei
dieser Gefahrenbereich durch einen an ein pneumatisches
Leitungsnetz angeschlossenen Fussboden abgesichert ist,
bei dessen Betretung oder Belegung sich mindestens eine
Druckwelle zu wenigstens einem ersten Druckwellenschalter
fortplanzt, der hierauf mittels eines elektrischen Impulses das Ausschalten der Maschine oder Anlage veranlasst.

Einrichtungen dieser Art dienen zur Verhütung von Betriebsunfällen. In erster Linie wird daran gedacht, Personen,
die sich zu nahe einer arbeitenden Maschine oder sonst
einer in Bewegung stehenden Anlage (z.B. einem Förderband,
einem sogenannten Industrieroboter welcher bearbeitete
Werkstücke mittels einer Schwenkbewegung von einer
Maschine zur nächsten befördert, aber auch ein sich
schliessendes Fabriktor) aufhalten, vor dieser Maschine
bzw. Anlage zu schützen. Die Einrichtung soll aber auch
verhindern, dass aus Versehen Gegenstände im Bereich
einer solchen Anlage abgestellt werden, welche dann die
Bewegung, namentlich eine Schwenkbewegung, behindern und
dabei zu Schäden an der Maschine bzw. Anlage und damit
zu kostspieligen Betriebsunterbrechungen führen.

Einrichtungen dieser Art sind schon bekanntgeworden;
als Beispiel seien diejenige nach den Schweizer Patentschriften 610 382 oder ... ... (Gesuch 818/79) genannt.
Solche Anlagen arbeiten sehr zuverlässig.

Nun sind aber in der letzten Zeit die Sicherheitsvorschriften wesentlich verschärft worden. Ausserdem ist zu
bedenken, dass man sich auf das einwandfreie Funktionieren
solcher Einrichtungen wegen der hohen Sicherheit, die sie
bieten, restlos verlässt. Dies bedeutet aber, dass die
Einrichtungen nicht nur das Auftreten einer Gefahr anzeigen müssen, sondern auch dann einen Alarm auslösen sollen,
wenn an ihnen selber ein Defekt auftritt, wie immer dieser
Defekt auch geartet sei. Diesen Ansprüchen vermochten
allerdings die bisherigen  Anlagen zwar weitgehend, aber
nicht restlos zu genügen. Es bestand die Möglichkeit,
dass bei bestimmten Defekten, deren Wahrscheinlichkeit
jedoch äusserst gering war, die Einrichtung nicht in der
Lage war, diesen Defekt zu erkennen und Alarm auszulösen.

Die Erfindung hat daher den Zweck, eine elektropneumatische Einrichtung zu schaffen, die nicht nur die angeschlossene Maschine oder Anlage, sondern auch sich selber
dauernd überwacht und jede Störung, ob sie nun an der
Maschine bzw. Anlage oder an der Einrichtung selber auftritt, sofort als solche zu erkennen und zu melden vermag.

Eine solche Einrichtung der eingangs erwähnten Art ist
durch die kennzeichnenden Merkmale des Anspruches 1
definiert.

Ein Ausführungsbeispiel der erfindungsgemässen Einrichtung wird anhand der beiliegenden Zeichnungen näher
erläutert; es zeigen:

Fig. 1    ein Schema des pneumatischen Teils der
          Einrichtung, und

Fig. 2    ein Schema des elektronischen Teils, hauptsächlich ein Schema des Steuergerätes.

Mit 1 ist eine Steuerung einer Maschine oder einer Anlage bezeichnet, die durch die erfindungsgemässe Einrichtung sofort ausser Betrieb gesetzt werden soll, wenn sich Personen innerhalb eines Gefahrenbereiches in der Nähe dieser Maschine bzw. Anlage aufhalten, in welchem sie entweder durch den Betrieb gefährdet sind oder umgekehrt diesen Betrieb durch ihre Anwesenheit stören. Die Abschaltung erfolgt auch, wenn sperrige Gegenstände in den genannten Bereich verbracht und dort abgelagert werden; wenn beispielsweise die Anlage ein sogenannter Industrieroboter ist, der an einer Fertigungsstrasse Schwenkbewegungen ausführt, dann muss ein Bereich abgegrenzt sein, der nicht durch andere Gegenstände derart belegt werden kann, dass die genannten Schwenkbewegungen behindert werden.

Die erfindungsgemässe Absicherungseinrichtung setzt sich aus verschiedenen Einzelteilen zusammen. Sie enthält ein elektronisches Steuergerät 2, welches die Maschine bzw. Anlage überwacht und sie unter bestimmten Bedingungen durch Einwirkung auf die Steuerung 1 abschaltet. Im weiteren gehören zu dieser Einrichtung eine Hauptpumpe 3, eine Hilfspumpe 4, zwei Ventile 5,6, zwei miteinander in noch darzustellender Weise verbundene Druckwellenschalter 7,8 und eine Anzahl von im freizuhaltenden Bereich angeordnete sogenannte Sicherheitsdosen 9, die sich unter einem diesen Bereich bildenden, schwimmend angeordneten Fussboden 10 befinden. Jede Dose 9 besteht aus einem Unterteil und einem relativ dazu verschiebbaren Oberteil. Bei Betreten des Fussbodens wird der Oberteil mindestens einer Dose in den Unterteil gedrückt und bewirkt dadurch Druckänderungen in einem pneumatischen Leitungsnetz, welches aus drei voneinander unabhängigen Teilstücken 11,12,13 besteht. Die Hauptpumpe 3, die Sicherheitsdosen 9 und der erste Druckwellenschalter 7
sind in Serie im ersten Teilstück 11 angeordnet. Dieser
Schalter 7 enthält in seinem Innern eine blasenförmige
Membrane 14. Sie ist mit einer im zweiten Druckwellenschalter, dem Ueberwachungs-Druckwellenschalter 8, angeordneten gleichen Membrane 15 durch das Teilstück 12
des Leitungsnetzes verbunden. Das dritte Teilstück 13
verbindet den Zwischenraum zwischen dieser Membrane 15
und dem Gehäuse des Druckwellenschalters 8 mit der
Hilfspumpe 4.

Drei Zweigleitungen 16,17 und 18 zweigen von diesem Netz
11-13 ab. Die erste Zweigleitung 16 nimmt ihren Anfang
an einem Punkt im Teilstück 11, der sich zwischen der
Hauptpumpe 3 und den Dosen 9 befindet, und endet bei dem
zur Hauptpumpe 3 gehörenden Ventil 5. Die Zweigleitung
17 zweigt vom Teilstück 12 an einem Punkt zwischen den
beiden Druckwellenschaltern 7,8 ab und endet neben der
Zweigleitung 16 an derselben Stelle. Die Zweigleitung
18 führt von einem Punkt im Teilstück 13 zwischen dem
Ueberwachungs-Druckwellenschalter 8 und der Hilfspumpe 4
zu dem zu letzteren gehörenden Ventil 6. Die beiden Ventile 5,6 sind Solenoidventile; an jedem der in den
betreffenden Elektromagneten eintauchenden Kerne ist
ein Gummiteller angebracht, der sich in erregten Zustand
des Elektromagneten auf die offenen Enden der Zweigleitungen 16,17 (beim Ventil 5) bzw. das offene Ende der
Zweigleitung 18 (beim Ventil 6) abdichtend anlegt.

Jede der beiden Membrane 14,15 enthält zwei Kontaktstücke 19,20, die sich aufeinander legen, wenn der Druck
in der betreffenden Membrane aus noch darzustellenden
Gründen absinkt.

Die Hauptpumpe 3, die Hilfspumpe 4 und die beiden
Ventile 5,6 sind elektrisch an das Steuergerät 2 angeschlossen und werden von diesen aus angesteuert bzw.
übermitteln ihre jeweiligen Betriebszustände an dasselbe.

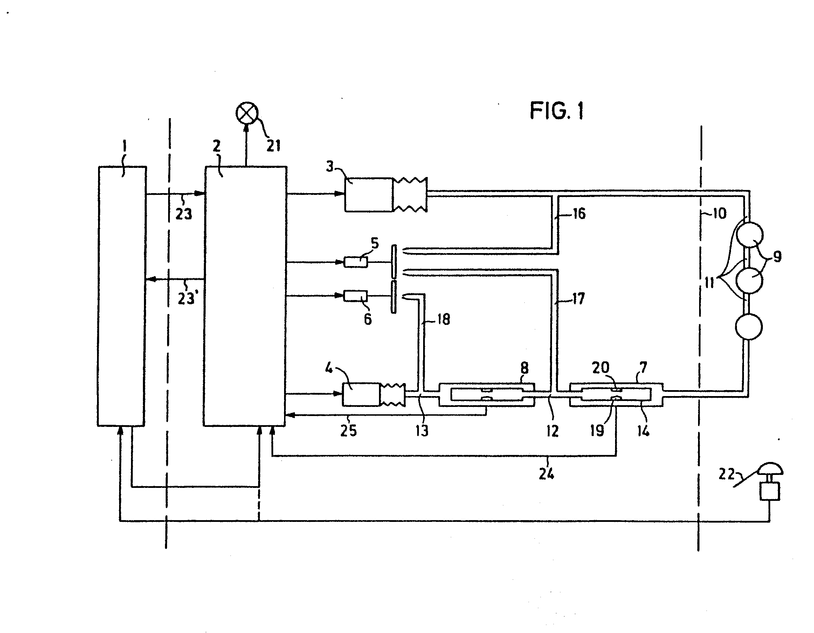

Nunmehr soll die Funktion des pneumatischen Teils der
Einrichtung anhand von Fig. 1 erläutert werden.

Die Einrichtung wird in Betrieb genommen, indem das
Steuergerät 2 an die Netzspannung angeschlossen wird,
was entweder direkt oder über die Steuerung 1 der Maschine bzw. Anlage erfolgen kann. Das Steuergerät 2
zeigt auf einer hier nur symbolisch dargestellten
Anzeigeeinrichtung 21, z.B. einer Anzeigetafel, diesen
Vorgang an, z.B. durch Aufleuchten einer Lampe "Netz ein"

Nunmehr wird eine Starttaste 22 gedrückt. Sie wirkt
vorzugsweise auf die Steuerung 1 ein, welche über eine
Leitung 23 ein Signal an das Steuergerät 2 bzw. an die
Anzeigevorrichtung 21 weiterleitet, an welcher die
entsprechenden Signale aufleuchten. An einem Uebergang
23' vom Steuergerät 2 zur Maschinensteuerung 1 wird ein
Kontakt geschlossen. Damit ist die letztere nunmehr
vom Steuergerät 2 aus ansteuerbar.

Durch die Starttaste 22 werden noch weitere Impulse
ausgelöst. Einer setzt die Hilfspumpe 4 in Betrieb, und
ein weiterer schliesst die beiden Ventile 5,6, womit die
Zweigleitungen 16-18 abgedichtet werden. Die Hilfspumpe
4 führt nun einen Funktionstest aus, indem sie, da sie
eine Unterdruckpumpe ist, im Teilstück 13 einen Unterdruckstoss erzeugt. Dieser pfanzt sich in den Ueberwachungs-Druckwellenschalter 8 hinein fort und bewirkt dort ein Aufblähen der blasenförmigen Membrane 15, die, weil das Ventil 6 bis vor kurzem noch offen war, über die Zweigleitung 18 mit Luft unter Atmosphärendruck versorgt worden war. Die Volumenvergrösserung der Membrane 15 hat eine Zusammenziehung der Membrane 14 des Arbeitsdruckwellenschalters 7 zur Folge, weil die Luft aus ihr in die grösser gewordene Membrane 15 abströmt, und die geschlossene Zweigleitung 17 dieses Abströmen nicht ausgleichen kann. Die Membrane 14 wird schliesslich so schmal, dass ihre beiden Kontaktstücke 19,20 einander berühren. Dadurch entsteht ein elektrischer Impuls, der über eine Leitung 24 in das Steuergerät 2 gelangt. Dort wird sein zeitliches Eintreffen in noch darzustellender Weise mit einem vorgegebenen Zeitintervall verglichen; liegt dieses Eintreffen des Impulses innerhalb des genannten Intervalls, ist der Funktionstest positiv verlaufen.

Man ersieht daraus, dass beispielsweise bereits eine Störung an einem der beiden Ventile 5,6 dazu führen kann, dass kein Signal über die Leitung 24 abgegeben wird. Der Sog der Hilfspumpe 4 würde nämlich in diesem Störungsfalle über die dann offene Zweigleitung 18 ausgeglichen. Andererseits könnte auch die Zweigleitung 17 offen bleiben. In beiden Fällen würden die Membrane 14,15 druckausgeglichen und ihre Kontakte daher offen bleiben. Wenn aber kein Impuls über die Leitung 24 in das Steuergerät 2 gelangt, öffnet dieses nach Ablauf des erwähnten Zeitintervalls den Kontakt am Uebergang 23. Die Steuerung 1 und damit die angeschlossene Maschine oder Anlage werden ausgeschaltet.

Hat jedoch der Funktionstest das ordnungsgemässe Arbeiten aller Teile bestätigt, setzt das Steuergerät 2 nun die Hauptpumpe 3 in Betrieb. Diese arbeitet mit kurzen Unterdruckstössen in zeitlich festgelegten Abständen, also beispielsweise alle zwei Sekunden. Jeder Unterdruckstoss pflanzt sich über die Sicherheitsdosen 9 bis zum Arbeitsdruckwellenschalter 7 fort. Nun passiert genau das Umgekehrte wie vorher: jetzt wird die Membrane 14 aufgebläht und entzieht der Membrane 15 im Ueberwachungs-Druckwellenschalter 8 die Luft, die sich daraufhin zusammenzieht und dadurch ihre Kontaktstücke aneinanderlegt. Der daraus resultierende elektrische Impuls wird über eine Leitung 25 in das Steuergerät 2 übermittelt und dort als ordnungsgemässes Arbeiten der Organe 3,9 und 7 ausgewertet. Bis zur Auslösung eines neuen Unterdruckstosses werden kurz die Ventile 5,6 geöffnet. Dadurch kann sich der Druck in den Zweigleitungen 16-18, der eventuell wegen Temperaturschwankungen sich verändert haben könnte, jeweils wieder auf den Ausgangswert einstellen.

Es sei nun angenommen, dass jemand kurz auf den Fussboden 10 tritt, diesen aber sofort wieder verlässt. Mindestens eine der Sicherheitsdosen 9 wird dadurch zusammengepresst, was im Teilstück 11 selbst dann einen Ueberdruckstoss auslöst, wenn die Hauptpumpe 3 gleichzeitig einen Unterdruckstoss bewirkt hat. Dieser Ueberdruckstoss oder der resultierende Druckstoss gelangt in das Gehäuse des Schalters 7 und drückt dort die Membrane 14 zusammen. Erneut resultiert daraus ein elektrischer Impuls auf der Leitung 24. Dieser liegt nun aber zeitlich anders als der Testimpuls, was vom Steuergerät 2 erkannt und durch sofortiges Abschalten der Steuerung 1 quittiert wird.

Wenn nun aber die Belastung einer der Sicherheitsdosen
9 bleibt, führt auch dies zum Ausschalten. Die Unterdruckstösse der Hauptpumpe 3 können sich nämlich nicht
mehr über die nunmehr stets zusammengedrückte Sicherheitsdose 9 hinaus fortpflanzen. Die beiden Druckwellenschalter 7,8 erhalten keinen Ueber- oder Unterdruckstoss
mehr. Ihre Membranen 14,15 bleiben daher ausser Betrieb,
und nunmehr wird auch das Ausbleiben ihrer Signale vom
Steuergerät 2 erkannt, welches auf dieses Fehlen mit
Ausschalten der Steuerung 1 reagiert.

Nun dürfte auch klar sein, dass eine Leckstelle in einem
der Teilstücke 11,12,13 ebenfalls denselben Effekt bewirkt; die beiden Schalter 7,8 erhalten entweder gar
keinen Unterdruckstoss mehr oder, falls einer doch noch
eintrifft, wird er sofort ausgeglichen derart, dass die
beiden Membrane 14,15 in ihrem Normalzustand verbleiben
und keine elektrischen Impulse an das Steuergerät 2
abgeben.

Die Einrichtung ist also weitgehend betriebssicher und
schaltet auf alle denkbaren unüblichen Betriebszustände
sofort die von ihr überwachte Maschine oder Anlage ab.

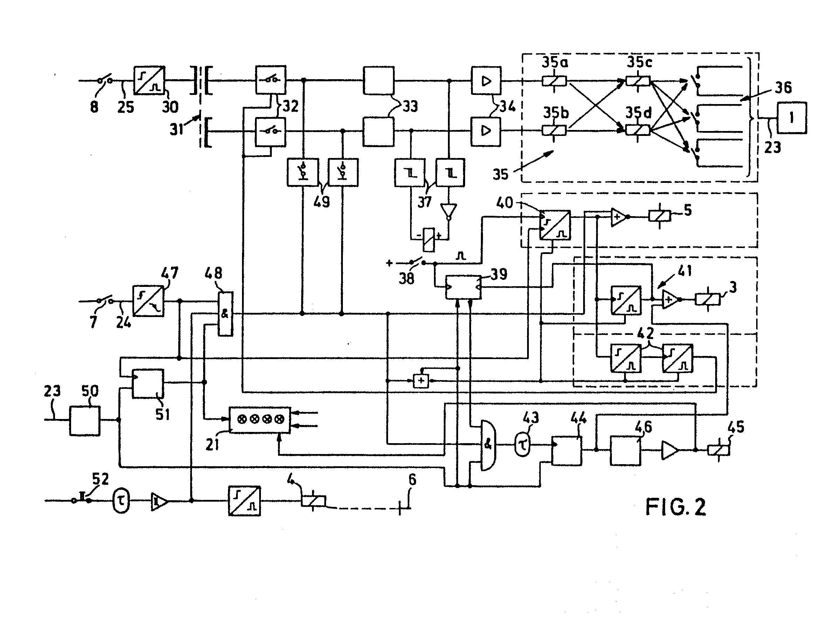

Nunmehr soll anhand der Fig. 2 die Schaltung der Einrichtung, insbesondere diejenige des Steuergerätes 2,
beschrieben werden.

Links oben in dieser Figur ist der Ueberwachungs-Druckwellenschalter 8 dargestellt. Dieser hat soeben einen
pneumatischen Ueberwachungsimpuls erhalten. Ein durch
das Zusammenziehen seiner Membrane 14 und die dadurch
bedingte Schliessung seiner Kontaktstücke 19,20 (Fig. 1)
ausgelöster elektrischer Impuls gelangt über die Leitung 25 vorerst in ein Impulsdauerbegrenzungsglied 30. Hier
wird der Impuls auf die Dauer von drei Millisekunden
begrenzt. Dieser verkürzte Impuls gelangt in einen
Transformator 31 mit einem Eingang, jedoch mit zwei
Ausgängen. An diesen erscheint nunmehr je ein Impuls.
Beide Impulse passieren hierbei je ein Tor 32 und gelangen
zu je einem als Zeitkonstantglied wirkenden Kondensator
33. Durch die zeitlich genau gleich eintreffenden und
gleich lang dauernden Impulse werden beide Kondensatoren
sprunghaft auf eine Spannung, beispielsweise auf 24V
aufgeladen, die sich nachher wieder langsam abbaut. Jeder
Spannungsimpuls wird über ein Pufferglied 34 auf eine
Ausgangsrelaisgruppe 35, bestehend aus vier Relais 35a-35d,
geleitet. Jedes der beiden ersten, den Impuls übernehmenden
Relais 35a,35b ist mit den beiden nachfolgenden Relais 35c,
35d gekoppelt; es ist also eine kreuzweise Kopplung vorhanden, welche verhindert, dass infolge von Störungen in
einzelnen Komponenten Impulse auf die Ausgänge 36 zur
Steuerung 1 gelangen, die vorher hätten eliminiert werden
sollen.

Es wurde bei der Beschreibung des pneumatischen Teils
erwähnt, dass die Hauptpumpe 3 beispielsweise alle zwei
Sekunden einen Unterdruckstoss in das Leitungsnetz 11,12,
13 abgibt. Weil dadurch auch der Schalter 8 regelmässig
schliesst, gelangt in gleichen zeitlichen Abständen je
ein elektrischer Impuls auf die Zeitkonstantglieder 33.
Diese können sich daher in der Zwischenzeit nur wenig
entladen, sodass die beiden Relais 35a,35b nicht abfallen.
Erst wenn die beiden Parallelimpulse ausbleiben, entladen
sich die beiden Zeitkonstantglieder 33 weiter bis zu demjenigen Wert, an welchem die genannten Relais nunmehr abfallen und damit das Stillsetzen der angeschlossenen
Maschine einleiten. Beim normalen Entladen wird jedoch
regelmässig ein Wert unterschritten, der durch einen Schwellwertschalter 37 bestimmt ist. Dieser Schwellwert war beim weiter oben erwähnten sprunghaften Aufladen der beiden Zeitkonstantglieder 33 überschritten worden und hatte dadurch zum Abfallen eines vom Schwellwertschalter 37 abhängigen Relais 38 geführt, was zur Zurücksetzung eines Multivibrators 39 führte. Nunmehr wird jedoch wie erwähnt durch das langsame Absinken der Spannungen an den Zeitkonstantgliedern 33 der Schwellwert wieder unterschritten. Der Schwellwertschalter 37 spricht darauf an und das Relais 38 wird wieder angezogen. Dadurch wird ein elektrischer Impuls auf ein weiteres Zeitkonstantglied 40 gegeben, das dem Hauptpumpenventil 5 vorgeschaltet ist. Das letztere öffnet während der Zeit, die durch das Zeitkonstantglied 40 bestimmt ist, also für beispielsweise etwa 150 msec, wodurch die Zweigleitungen 16,17 und damit die angeschlossenen Teilstücke 11,12 entlüftet werden, sodass in diesen Teilstücken wieder Normaldruck herrscht. Dies ist vor allem dann von Bedeutung, wenn beispielsweise infolge von Erwärmung ein Druckanstieg stattgefunden hat, welcher hauptsächlich die auf Unterdruck ansprechenden Schalter 7,8 beeinflussen könnte.

Sofort nach Ablauf der Laufzeit des Zeitkonstantgliedes 40 wird über ein weiteres Zeitkonstantglied, das Teil eines Pumpenschaltelementes 41 für die Hauptpumpe 3 bildet, ein Impuls auf dieses Element 41 gegeben. Dieses setzt nun die Hauptpumpe 3 für einen weiteren pneumatischen Ueberwachungsstoss in Betrieb, wie bereits weiter oben erwähnt wurde. Es folgt daraus, dass sich die ganze Einrichtung selber in Betrieb hält und somit selber überwacht. Sofern nirgends eine Störung auftritt, wiederholt sich dieser Ueberwachungszyklus ständig in gleichen Zeitintervallen, also vorzugsweise alle zwei Sekunden.

Der Impuls auf die Hauptpumpe 3 setzt den Multivibrator
39 in einen Zustand der Alarmvorbereitung. Der über das
Relais 38 eintreffende Kontrollimpuls setzt ihn jedoch
wieder zurück; der Alarm unterbleibt.

Mit dem Pumpenimpuls wird auch eine Verzögerungsschaltung
42 in Betrieb genommen. Ihre Verzögerungszeit ist etwas
kürzer als die Laufzeit des pneumatischen Ueberwachungsimpulses. Nach Ablauf ihrer Zeit öffnet die Schaltung 42
die beiden Tore 32 für eine kurze Zeit, beispielsweise
für etwa 400 msec, damit der Impuls vom Ueberwachungsschalter 8 durch die Tore 32 hindurch zu den Zeitkonstantgliedern 33 und weiter zur Relaisgruppe 35 gelangen kann.
Mit dieser Verzögerungsschaltung 42 soll vermieden werden,
dass der von der Hauptpumpe 3 ausgehende Ueberwachungsimpuls unter Umgehung des Fussbodens 10 direkt auf den
Ueberwachungsschalter 8 gegeben wird. Die Laufzeit dieses
Impulses wäre dann kürzer; dann kommt aber der von ihm
ausgelöste elektrische Impuls zu einer Zeit vor die
Tore 32, bei welcher diese noch geschlossen sind. Der
Impuls wird also nicht weitergeleitet, und die Relaisgruppe
35 schaltet durch Abfallen die Steuerung 1 aus.

Im folgenden sollen nun einige weitere aussergewöhnliche
Zustände betrachtet werden; einzelne wurden bereits angedeutet.

Es sei vorerst angenommen, dass der pneumatische Ueberwachungsimpuls aus irgend einem Grunde zu spät, zu früh
oder überhaupt nicht mehr eintrifft, beispielsweise wegen
eines Defektes oder weil der Fussboden 10 belegt wurde
und damit die Sicherheitsdosen 9 verschlossen sind.
Wegen des fehlenden Wiederaufladeimpulses entladen sich die Zeitkonstantglieder 33 nunmehr ununterbrochen; ihre Spannung unterschreitet vorerst den Schwellwert des Schwellwertschalters 37 und bald darauf auch denjenigen der beiden Relais 35a, 35b, sodass die letzteren abfallen. Weil beim Unterschreiten des Schwellwertes das bipolare Relais 38 anzieht, nun aber nicht mehr abfallen kann, wird auch der Multivibrator 39 vorerst nicht mehr zurückgesetzt. Sein Impuls gelangt auf eine Zeitverzögerungsstufe 43, die wegen des Fehlens eines Rückstellimpulses nach Ablauf ihrer Zeit einen Alarmmultivibrator 44 setzt, dem eine Alarmvorrichtung 45 samt Alarmtaktgeber 46 nachgeschaltet sind. Der genannte Multivibrator 44 wirkt jedoch vorerst nur auf die Hauptpumpe 3 und setzt diese ausser Betrieb. Damit fallen auch die Ueberwachungsimpulse aus, sodass definitiv Gewähr dafür geboten ist, dass die Relais 35a,35b abfallen müssen. Ein Defekt oder eine Störung wirkt sich also auf die sichere Seite aus. Wenn die Absicherungseinrichtung vor der Störung einwandfrei gearbeitet hat, wird schliesslich ein Resetsignal über die Zeitverzögerungsstufe 43 auf den Multivibrator 39 gegeben, der dann doch noch zurückgesetzt wird. Damit wird ein unnötiger Alarm verhindert; es genügt, dass die angeschlossene Maschine oder Anlage ausser Betrieb gesetzt wird. Das Belegen des Fussbodens 10 und damit die Blockierung der Sicherheitsdosen 9 hat ausser der Nichtweiterleitung des pneumatischen Ueberwachungsimpulses auch zur Folge, dass der Arbeitsdruckwellenschalter 7 durch den Belegungsvorgang einen Druckstoss erhält. Dieser bewirkt die schon erwähnte Kompression der Membrane 14 und damit einen elektrischen Impuls auf die Leitung 24. Der letztere setzt über eine Entpreller- und Abfallverzögerungsstufe 47 ein Schaltelement 48 in Betrieb, welche zwei Entladeschalter 49 ansteuert. Diese entladen die beiden Zeitkonstantglieder 33 augenblicklich, die wegen der Blockierung der
Sicherheitsdosen 9 nun auch nicht mehr aufgeladen
werden können. Damit treten die weiter oben beschriebenen Folgen wie das Abfallen der Relaisgruppe 35 und
das Ausschalten der Hauptpumpe 3  auf.

Wird der Fussboden 10 wieder freigegeben, wird zwar der
Arbeitsdruckwellenschalter 7 wieder in seine Normalstellung zurückversetzt. Er erhält aber noch keine Impulse, denn die Hauptpumpe wurde ja abgeschaltet. Sie
muss daher zuerst wieder in Betrieb genommen werden, was
durch einen Impuls auf das Zeitkonstantglied 40 erfolgt,
der das Hauptpumpenventil 5 zwecks Herstellung des
Normaldruckes in der Leitung 11 betätigt. Dann folgt
ein weiterer Impuls, diesmal auf die Hauptpumpe 3. Diese
nimmt dann den schon beschriebenen Ueberwachungszyklus
wieder auf, und die Relaisgruppe 35 schaltet die Ausgänge
36 wieder ein. Soll die Einrichtung, nachdem sie völlig
abgeschaltet war, also beispielsweise bei Arbeitsbeginn
in Betrieb genommen werden, wird zuerst die Starttaste 22
betätigt. Dadurch wird die Steuerung 1 der Maschine oder
Anlage unter Spannung gesetzt, die nun ihrerseits am
Steuergerät 2 eine Gleichspannung anlegt. Als Eingang
dient eine Resetschaltung 50, an welche sich ein Multivibrator 51 anschliesst, der sowohl mit der Anzeigevorrichtung 21 als auch mit der schon erwähnten Schaltung
48 in Verbindung steht. Erreicht die Spannung in der
Schaltung 50 einen bestimmten Wert, beispielsweise 20V,
wird der Resetzustand aufgehoben. Der einsetzende Stromfluss wird jedoch vorerst vom Multivibrator 51 blockiert.
Um diesen zu setzen, muss nun zuerst der Druckwellenschalter 7 betätigt werden, dessen Impuls den Multivibrator setzt. Nunmehr werden auch die Entladeschalter 49 angesteuert,welche nun ihrerseits die Zeitkonstantglieder
33 auf Spannungsfreiheit prüfen oder sie entladen, wenn
noch Spannung vorhanden ist, was beispielsweise nach
einem kurzen Unterbruch der Fall sein kann. Auf alle
Fälle wird dadurch kontrolliert, ob sich die Relais 35
im abgefallenen Zustand befinden oder gegebenenfalls
sofort in diesen überführt werden müssen.

Ist nun aber beim Einschalten der Absicherungseinrichtung
der Fussboden 10 bereits belegt, kann der erste Ueberwachungsimpuls der Hauptpumpe 3 nicht bis zum Druckwellenschalter 7 gelangen. Der Multivibrator 39 bleibt
gesetzt, ebenso der Alarmmultivibrator 44. Dadurch werden
nun die Alarmorgane 45,46 und die Anzeigevorrichtung 21
eingeschaltet. Wie erwähnt, wird dieser Alarm aber nur
beim Einschalten und bereits belegtem Fussboden 10
ausgelöst.

Nunmehr sei jedoch wieder angenommen, dass der Fussboden
10 frei sei.
Die Einrichtung ist nunmehr zwar eingeschaltet, aber
noch nicht betriebsbereit, weil die Relaisgruppe 35
sich im abgefallenen Zustand befindet. Um die zyklischen
Konstrollfunktionen aufzunehmen, muss das Hauptpumpenventil 5 gestartet werden und zwar durch einen Impuls
über das Zeitkonstantglied 40. Dieser Impuls kann nun
aber nur vom Druckwellenschalter 7 kommen, weshalb dieser
betätigt werden muss, entweder durch Begehen des Fussbodens oder dann durch Betätigung eines nachfolgend noch
zu beschreibenden Prüfschalters 52. Der Impuls des
Schalters 7 nimmt nun nicht nur die Hauptpumpe 3 in
Betrieb, sondern setzt auch den Multivibrator 51 zurück.
Die Hauptpumpe 3 beginnt nun zu arbeiten, und die Unterdruckstösse gelangen via das pneumatische Leitungsnetz
11-13 wieder zurück zum Schalter 7, der jeweils wieder
der Hauptpumpe dem Impuls zum Weitermachen gibt. Damit
befindet sich die Einrichtung wieder im Zustand der
dauernden Selbstüberwachung.

Die Einrichtung kann auch von Hand auf ihre Funktionsfähigkeit geprüft werden. Hierzu dient der schon erwähnte Prüfschalter 52. Er wird kurz geöffnet, was
einen Impuls zur Folge hat, der genau gleich wie der
vorhin erwähnte Impuls beim Spannungsanstieg auf das
Schaltelement 48 wirkt und dadurch den abgefallenen
Zustand der Relaisgruppe 35 nachprüft oder ihn gegebenenfalls herbeiführt. Dieser Impuls geht aber nicht über
den Multivibrator 51, und damit bleibt die Hauptpumpe 3
ausser Betrieb. Daher wird die Hilfspumpe 4 in Betrieb
gesetzt. Sie gibt einen kurzen Unterdruckstoss auf den
Ueberwachungs-Druckwellenschalter 8 ab, der nun den
Arbeitsdruckwellenschalter 7 über die miteinander
verbundenen Membrane 14,15 in gleicher Weise betätigt
wie die weiter oben erwähnte, durch die Begehung des
Fussbodens 10 ausgelöste Druckwelle. Der Arbeitsdruckwellenschalter 7 ist damit betätigt, und die übrigen
Vorgänge bis zur automatischen Selbstüberwachung spielen
sich gleich ab wie bei der vorhin erwähnten Inbetriebnahme der Einrichtung.

Wie aus den vorliegenden Ausführungen somit hervorgeht,
überwacht die Einrichtung nicht nur die angeschlossene
Maschine oder Anlage bzw. den Gefahrenbereich, sondern
auch sich selber, indem sie regelmässig ihre eigenen
Komponenten auf deren Funktionieren hin nachprüft und
bei Ausfall eines derselben sofort die Ausschaltung der
Maschine oder Anlage einleitet und dieses Ausschalten
und damit indirekt auch den Defekt anzeigt.

Patentansprüche

1. Elektropneumatische Einrichtung zur Absicherung eines Gefahrenbereiches bei einer in Betrieb stehenden Maschine oder Anlage, wobei dieser Gefahrenbereich durch einen an ein pneumatisches Leitungsnetz (11,12,13) angeschlossenen Fussboden (10) abgesichert ist, bei dessen Betretung oder Belegung sich mindestens eine Druckwelle zu wenigstens einem ersten Druckwellenschalter (7) fortpflanzt, der hierauf mittels eines elektrischen Impulses das Ausschalten der Maschine oder Anlage veranlasst, gekennzeichnet durch die folgenden Merkmale:

   a) eine Hauptpumpe (3) am Anfang eines ersten Teilstückes (11) des pneumatischen Leitungsnetzes (11,12,13) zur Erzeugung von zeitlich regelmässig auftretenden, das einwandfreie Arbeiten der Einrichtung kontrollierenden Druckschwankungen in demselben,

   b) einen zweiten Druckwellenschalter (8), der wie der erstgenannte Schalter (7) eine blasenartige, elektrische Kontakte (19,20) aufweisende Membrane (15) im Innern seines Gehäuses aufweist, wobei diese Membrane mit derjenigen (14) des ersten Schalters (7) über ein zweites Teilstück (12) des Leitungsnetzes verbunden ist,

   c) eine Hilfspumpe (4), die mit dem Gehäuse des zweiten Druckwellenschalters (8) über ein drittes Teilstück (13) des Leitungsnetzes in Verbindung steht, um in diesem Schalter (8) eine ebenfalls zu Kontrollzwecken dienende Druckschwankung zu erzeugen,

d) Entlüftungsleitungen (16,17,18) für jedes
   der drei Teilstücke (11,12,13) des pneumatischen
   Leitungsnetzes, die je ein in die Atmosphäre
   mündendes und durch Solenoidventile (5,6) von
   dieser abschliessbares freies Ende aufweisen,
   und

e) ein elektronisches Steuergerät (2), das mit den
   beiden Druckwellenschalter (7,8), den beiden
   Pumpen (3,4) und den Ventilen (5,6) für die
   Entlüftungsleitungen (16,17,18) sowie mit der
   Steuerung (1) der Maschine oder Anlage in
   elektrischer Verbindung steht, um den Durchlauf
   der Druckschwankungen durch das Leitungsnetz
   (11,12,13) zu überwachen und bei Unregelmässigkeiten oder beim Ausbleiben dieser Druckschwankungen die Maschine oder Anlage abzuschalten
   sowie eine Alarmanzeigevorrichtung (21) in
   Betrieb zu setzen.

2. Einrichtung nach Anspruch 1, dadurch gekennzeichnet,
dass die beiden Pumpen (3,4) Unterdruckpumpen sind, um
Druckschwankungen in Form von Druckabsenkungen durchzuführen.

3. Einrichtung nach Anspruch 1, dadurch gekennzeichnet,
dass im Fussboden (10) mehrere, aus je einem Ober- und
Unterteil bestehende Dosen (9) hintereinander im ersten
Teilstück (11) des Leitungsnetzes angeordnet sind, wobei
jeder Oberteil relativ zum Unterteil derart bewegbar ist,
dass die Dosen bei Begehen des Fussbodens (10) Ueberdruckstösse abgeben, bei Belegung desselben jedoch das Teilstück (11) dauernd unterbrechen.

4.  Einrichtung nach Anspruch 1, dadurch gekennzeichnet, dass die vom ersten und zweiten Teilstück (11,12) abzweigenden Entlüftungsleitungen von einem gemeinsamen Ventil (5) gleichzeitig verschliessbar sind.

5.  Einrichtung nach Anspruch 1, dadurch gekennzeichnet, dass der Steuerkasten (2) einen Eingang für die elektrischen Impulse des zweiten, zur Ueberwachung des regelmässigen Durchganges der Druckschwankungen dienenden Druckwellenschalters (8) aufweist, sowie einen an diesen Eingang angeschlossenen Transformator (31) mit zwei Sekundärwicklungen, an die zwei parallele Leitungsstränge anschliessen, in denen je ein Torglied (32) und ein Zeitkonstantglied (33) angeordnet sind, und die in einer Ausgangsrelaisgruppe (35) enden, die aus zwei Gruppen von je zwei Relais (35a,c;35b,d) besteht, wobei jedes der direkt an die beiden Leitungsstränge angeschlossenen Relais (35a,35b) mit jedem der andern beiden Relais (35c,35d) verbunden ist.

6.  Einrichtung nach Anspruch 5, dadurch gekennzeichnet, dass die Zeitkonstantglieder (33) Kondensatoren sind, die durch jeden vom Transformator (31) auf die beiden Leitungsstränge aufgeteilten Impuls des genannten Druckwellenschalters (8) auf einen vorgegebenen Spannungswert aufgeladen werden und sich dann wieder stetig entladen.

7.  Einrichtung nach Anspruch 6, gekennzeichnet durch einen Schwellwertschalter (37), der mit jedem der beiden Leitungsstränge verbunden ist und dessen Schwellwert bei der Aufladung und Entladung der Zeitkonstantglieder über- bzw. unterschritten wird, wobei ein von diesem Schwellwertschalter (37) gesteuertes Relais (38) beim Ueberschreiten des Schwellwertes abfällt und dadurch einen Impuls auslöst, der über ein an einen vom Relais
(38) angesteuertes Zeitkonstantglied (40) angeschlossenes
Pumpenschaltelement (41) die Hauptpumpe (3) zur Abgabe
eines pneumatischen Ueberwachungsimpulses veranlasst.

8. Einrichtung nach Anspruch 7, dadurch gekennzeichnet,
dass die beiden Zeitkonstantglieder (33) sich während
den zeitlich regelmässig auftretenden Druckschwankungen
nur auf einen Spannungswert herunter entladen, der zwar
unter dem Schwellwert des Schwellwertschalters (37),
jedoch über dem Wert liegt, bei welchem die Relaisgruppe
(35) abfällt.

9. Einrichtung nach Anspruch 7, dadurch gekennzeichnet,
dass das vom Schwellwertschalter gesteuerte Relais (38)
über das genannte Zeitkonstantglied (40) das die Entlüftungsleitungen (16,17) des ersten und zweiten Teilstücks
(11,12) verschliessende Ventil (5) betätigt.

10. Einrichtung nach Anspruch 8, gekennzeichnet durch
zwei die beiden Zeitkonstantglieder (33) sofort und unter
den das Abfallen der Relaisgruppe (35) auslösenden Wert
entladende Entladeschalter (49), die an ein Schaltelement
(48) angeschlossen sind, das seinerseits von einer eine
Speisespannung an das Steuergerät (2) anlegenden Resetschaltung (50) über einen weiteren Multivibrator (51)
oder von einem Prüfschalter (52) angesteuert wird und
hierbei jeweils einen Impuls zur Schliessung der Endschalter (49) abgibt, wodurch über das Pumpenschaltelement
(41) auch die Hauptpumpe (3) ausser Betrieb gesetzt wird.

11. Einrichtung nach Anspruch 10, dadurch gekennzeichnet,
dass der erste Druckwellenschalter (7) mit dem Schaltelement (48) über eine direkte Leitung (24) verbunden ist, die den von der Schliessung der Kontaktelemente (19,20)
dieses Druckwellenschalters (7) entstehenden Impuls auf
das Schaltelement (48) gibt.

12. Einrichtung nach Anspruch 10, dadurch gekennzeichnet,
dass der vom Prüfschalter (52) ausgelöste Impuls auch das
Ventil (6) für die Entlüftungsleitung (18) des dritten
Teilstücks (13) schliesst und die Hilfspumpe (4) zur
Abgabe eines pneumatischen Unterdruckstosses veranlasst,
welcher vermittels des zweiten Druckwellenschalters (8)
indirekt auf den ersten (7) wirkt, um diesen zum Abgabe
des genannten elektrischen Impulses zu veranlassen.

13. Einrichtung nach Anspruch 10, dadurch gekennzeichnet,
dass der genannte weitere Multivibrator (51) sowie die
Leitung (24) vom ersten Druckwellenschalter (7) zu dem
die Entladeschalter (49) steuernden Schaltelement (48)
zusammen an eine Leitung angeschlossen sind, die zur
Hauptpumpe (3) führt, um diese wieder einzuschalten,
wobei diese Einschaltung nur durch einen vom ersten Druckwellenschalter (7) herkommenden Impuls erfolgt, der gleichzeitig auch den Multivibrator (51) wieder zurückstellt,
ferner das Ventil (5) für die Entlüftungsleitungen (16,17)
der ersten beiden Teilstücke (11,12) über das zugehörige
Zeitkonstantglied (40) betätigt und anschliessend daran
über ein im Pumpenschaltelement (41) enthaltenes weiteres
Zeitkonstantglied, dessen Laufzeit länger ist als dasjenige (40) für das genannte Ventil (5), die Hauptpumpe
(3) wieder einschaltet, damit diese erneut einen
pneumatischen Ueberwachungsimpuls abgibt.

14. Einrichtung nach den Ansprüchen 7 und 13, dadurch gekennzeichnet, dass der Impuls des an den Schwellwertschalter (37) angeschlossenen Relais (38) bei jeder Ansteuerung durch den Schwellwertschalter (37) eine Verzögerungsschaltung (42) ansteuert, deren Zeitkonstantglied eine kürzere Laufzeit aufweist als diejenige, die ein pneumatischer Impuls von seiner Erzeugung in der Hauptpumpe 3 für den Durchlauf durch das Leitungsnetz (11,12,13) bis zur Betätigung des zweiten Druckwellenschalters (8) braucht, und welche Schaltung (42) die Torglieder (32) in den beiden parallelen Leitungssträngen unmittelbar vor Eintreffen des vom zweiten Druckwellenschalter (8) herkommenden elektrischen Impulses schliesst.

FIG. 1

– 2 –

FIG.2